# EUROPEAN PATENT APPLICATION

(11) **EP 1 939 000 A1**
(43) Date of publication of application: **02.07.2008**
(21) Application number: 06810731.7
(22) Date of filing: 28.09.2006
(51) Int. Cl.: B41J 2/32, B29C 59/04, B31F 1/07, B41F 19/02, B41J 29/00, B41M 3/06, B41M 5/382

(54) **EMBOSSING DEVICE AND PRINTED MATTER**

(30) Priority: 30.09.2005 JP 2005287490
(71) Applicant: Dai Nippon Printing Co., Ltd., Tokyo 162-8001 (JP)
(72) Inventor: HIROTA, Kenichi, Tokyo; 1628001 (JP); NAGASHIMA, Masayuki, Tokyo; 1628001 (JP); ETOU, Mineaki, Tokyo; 1628001 (JP); ANAZAWA, Tomohiko, Tokyo; 1628001 (JP); UEDA, Satoshi, Tokyo; 1628001 (JP); FUKUI, Daisuke, Tokyo; 1628001 (JP)
(74) Representative: Smart, Peter John
(86) International application number: PCT/JP2006/319283
(87) International publication number: WO 2007/040134

(57) **Abstract**

An emboss device (1) includes an emboss roller (21) having a surface on which protrusions and recesses are formed, and a press roller (20) arranged oppositely to the emboss roller (21), wherein a print object (100) is held between these rollers and imparted with protrusions and recesses. Surface of the emboss roller (21) has an arithmetic mean roughness Ra of 4.50-18.55 µm and kurtosis Rku of 2.12-3.88. Uneven surface of the print object (100) has an arithmetic mean roughness Ra of 0.55 µm or above and skewness Rsk of -2.73 to -0.65.

## Description

### Technical Field

The present invention relates to an emboss device imparting a sheet-like object with protrusions and recesses and a print object having an uneven surface imparted with protrusions and recesses on a side of the print object on which image has been thermally transferred.

### Related Art

Some print object such as a photograph has a surface with suppressed glossiness. In a case of silver salt photograph, image is printed on a photographic paper imparted with protrusions and recesses on its surface, so that a print object is obtained with suppressed glossiness in a so-called silky tone. On the contrary, when a matte print object with suppressed glossiness is to be obtained by using a sublimation thermal transfer printer, it is inapplicable to impart an image receiving sheet with protrusions and recesses before forming image on the sheet, unlike the case of silver salt photography. Thus, it is necessary to impart protrusions and recesses to a print object on which image has been formed.

In this circumstance, a device is known as an emboss device imparting protrusions and recesses to a print object on which image has been formed. The emboss device has a heating roller having a surface on which protrusions and recesses are formed and incorporating a heater; and a cushion roller arranged oppositely to the heating roller. An image receiving sheet on which image has been formed by thermal transfer is held between these rollers, so that the image forming surface of the image receiving sheet is imparted with protrusions and recesses (Patent document 1).

Patent document 1: JP62-A-198857.

### Summary of Invention

### Problems to be Solved by the Invention

In order to improve a matte tone of the print object processed by such a device, it is necessary to vary various conditions of processing such that the depth and the size of protrusions and recesses imparted to the print object become greater. For example, the print object can be controlled when it is imparted with protrusions and recesses, such that the depth and the size of protrusions and recesses imparted to the print object become greater, by raising the temperature of processing the print object, raising the pressure of processing applied on the print object, slowing down the speed of processing thereby to elongate a time of processing, or the combination thereof.

However, variations of these conditions are limited by themselves. When a print object is requested to have some high level of tone, the conditions may become extreme and result in various adverse effects. For example, an image receiving sheet composed of laminated multiple sheets is generally used as a print object on which image is to be thermally transferred. In this case, when the temperature of processing is too high, the print object may be fused to the rollers. Also, so-called "blister phenomenon" may occur in an adhesive layer, which is used to laminate the sheets. Air bubbles in the adhesive layer grow their sizes due to blister phenomena as the temperature rises. The whole print object becomes uneven, so that the print object loses its function as a print object. Furthermore, when the pressure of processing is too high, the roller pressing the print object may deform, and thus the apparatus may become greater in size so as to generate such a high pressure. Furthermore, the efficiency of the processing degrades as the time of processing becomes longer. Thus, it is difficult to provide a print object on which image is thermally transferred and which has a preferable tone like a silky tone of a silver salt photography by simply varying the above conditions.

Thus, it is an object of the present invention to provide an emboss device with which a print object having a required tone is obtained without raising various conditions of processing such as temperature of processing, pressure of processing, and time of processing beyond necessity. Furthermore, it is an object of the present invention to provide a print object on which image is thermally transferred and which has a preferable tone like a silky tone of a silver salt photography.

### Means of Solving Problems

An emboss device according to the present invention includes an emboss roller having a surface on which protrusions and recesses are formed; and a press roller arranged oppositely to the emboss roller, wherein a sheet-like print object is held between the emboss roller and the press roller and is imparted with protrusions and recesses, and the surface of the emboss roller has an arithmetic mean roughness Ra defined in JIS B0601 :2001 standard of 4.50 to 18.55 µm and kurtosis Rku defined in the same standard of 2.12 to 3.88. Thus, the emboss device solves the above problem.

According to the invention, the conditions of the surface of an emboss roller includes an arithmetic mean roughness Ra defined in JIS B0601:2001 standard of 4.50 to 18.55 µm and kurtosis Rku defined in the same standard of 2 . 12 to 3. 88 . Thus, a print object having a required tone can be obtained without raising the various conditions in the emboss processing beyond necessity. In a case that the arithmetic mean roughness Ra is less than 4.50 µm, the print object cannot be imparted with protrusions and recesses of observable level to a naked eye. On the other hand, in a case that Ra is greater than 18.55 µm, the unevenness of observable level to a naked eye is generated when the protrusions and recesses are copied to the print object. The kurtosis Rku is, as well known, a dimensionless quantity indicating a measure of the peakedness in the height direction of the probability density function of the roughness curve of the surface of an object, and is strongly affected by the presence of outstanding peaks and valleys in the roughness curve. When the kurtosis Rku as a condition of the surface of the emboss roller is less than 2.12, the print object cannot be imparted with preferable protrusions and recesses of observable level to a naked eye, unless the temperature and pressure of the processing would be set in extreme levels. On the other hand, when the kurtosis Rku is greater than 3.88, the unevenness of the protrusions and recesses is generated on the surface of the print object, like the case when the arithmetic mean roughness Ra is small. Thus, in order to obtain a print object having a preferable tone without raising various conditions of the processing beyond necessity, the conditions of the surface of the emboss roller need to be set such that the arithmetic mean roughness Ra is in a range of 4.50 to 18.55 µm and the kurtosis Rku is in a range of 2.12 to 3.88.

Furthermore, the surface of the emboss roller may be covered with a plating layer of 20 µm or greater thick, and the protrusions and recesses may be formed by bombarding the surface with particles (P) of 12 to 68 µm diameter. In this case, the emboss roller works advantageous so as to suppress the generation of the unevenness of the protrusions and recesses copied to the print object and to obtain a print object having a preferable tone. When the plating layer is thinner than 20 µm, the effect of suppressing the generation of the unevenness of the protrusions and recesses is reduced. Since protrusions and recesses of the emboss roller is formed by bombarding with particles, the condition of the protrusions and recesses can be easily controlled by regulating the diameter of the bombarding particles. When the diameter of the particle is less than 12 µm, it becomes difficult to obtain a preferable tone observable to a naked eye. On the other hand, when the diameter is greater than 68 µm, the generation of the unevenness of the protrusions and recesses cannot be suppressed. Thus, the diameter of the particle can be set in a range of 12 to 68 µm.

A print object according to the present invention is a print object having an uneven surface imparted with protrusions and recesses on a side of the print object on which image has been thermally transferred. The uneven surface of the print object has an arithmetic mean roughness Ra defined in JIS B0601:2001 standard of 0.55 µm or greater and kurtosis Rku defined in the same standard of -2.73 to -0. 65. Thus, the print object solves the above problem.

According to the print object, a print object having a preferable tone like a silky tone of silver salt photography can be obtained even when image is to be thermally transferred to the print object. When the arithmetic mean roughness as a condition of the uneven surface of the print object is less than 0 . 55 µm, a tone in which protrusions and recesses are observable to a naked eye cannot be obtained. The skewness Rsk is, as well known, a measure reflecting asymmetricity in the height direction of the probability density function of the roughness curve of the surface of an object, and becomes negative when the distribution of the probability density function deviates toward the upper side in the height direction with respect to its average line, whereas it becomes positive when the distribution deviates toward the lower side in the height direction. In a case that the skewness Rsk as a condition of the uneven surface of the print object is negative, it means that flat unprocessed surfaces remain on the surface in some degree. If the skewness Rsk is less than -2.73 (when its absolute value is large), the unevenness of the protrusions and recesses of the print object becomes outstanding in a case that the arithmetic mean roughness Ra is 0.55 µm or greater. On the other hand, if the skewness Rsk is greater than -0.65 (when its absolute value is small), it is difficult to process the print object in a case that the arithmetic mean roughness Ra is 0.55 µm or greater. It is noted that, as the arithmetic mean roughness Ra increases, the skewness Rsk also increases and the unevenness of the protrusions and recesses becomes more outstanding. When the arithmetic mean roughness Ra becomes too great, the skewness Rsk has already exceeded its upper limit, and the unevenness of the protrusions and recesses becomes outstanding. Thus, it is not necessary to specifically define the upper limit of the arithmetic mean roughness Ra. Thus, when the arithmetic mean roughness Ra is set 0.55 µm or greater and the skewness Rsk is set in a range of -2.73 to -0.65 as the conditions of protrusions and recesses of the print object, a print object having a preferable tone like a silky tone of silver salt photography can be obtained even when image has been thermally transferred to the print object.

The uneven surface of the print object may be a surface imparted with protrusions and recesses such that the print object is held between an emboss roller having a surface on which protrusions and recesses are formed and a press roller arranged oppositely to the emboss roller. The surface of the emboss roller may have an arithmetic mean roughness Ra defined in JIS B0601 :2001 standard of 4.50 to 18.55 µm and kurtosis Rku defined in the same standard of 2.12 to 3. 88. According to these aspects, a print object having a preferable tone can be easily provided.

### Effect of Invention

As described above, according to the present invention, the conditions of the surface of an emboss roller includes an arithmetic mean roughness Ra of 4.50 to 18.55 µm and kurtosis Rku of 2.12 to 3.88. Thus, a print object having a required tone can be obtained without raising various conditions in the emboss processing beyond necessity. Furthermore, the conditions of the uneven surface of the print object includes an arithmetic mean roughness Ra of 0.55 µm or more and skewness Rsk of -2.73 to -0. 65. Thus, a print object having a preferable tone like a silky tone of silver salt photography can be obtained even when image has been thermally transferred to the print object.

### Brief Description of Drawings

[Fig. 1] Fig. 1 is a side view of an emboss device according to an embodiment of the present invention.
[Fig. 2] Fig. 2 is a front view of the emboss device from the right side of Fig. 1.
[Fig. 3] Fig. 3 is an enlarged top view of Figs. 1 and 2.
[Fig. 4] Fig. 4 is a view illustrating change of the position of a roller support device between a waiting position indicated with imaginary line and a pressing position indicated with solid line.
[Fig. 5] Fig. 5 is a perspective view showing a detailed structure of the emboss roller.
[Fig. 6] Fig. 6 is a view schematically illustrating a control procedure performed by a control part.
[Fig. 7] Fig. 7 is a flowchart showing an example of the control procedure of the process control performed by the control part.
[Fig. 8] Fig. 8 is a view showing an embodiment of the present invention in which an emboss device and a printer are combined together into a printing system.
[Fig. 9] Fig. 9 is a side view of an emboss device according to a variation of the present invention.
[Fig. 10] Fig. 10 is an enlarged view showing a part of a common structure of the emboss rollers relating to examples of processing.
[Fig. 11] Fig. 11 is a view showing various properties and results of evaluation relating to each example of processing.
[Fig. 12] Fig. 12 is a view illustrating sand-blasting method.
[Fig. 13] Fig. 13 is a section view schematically showing characteristic appearance of the print object obtained as a result of each working example.

### Best Mode for Carrying out the Invention

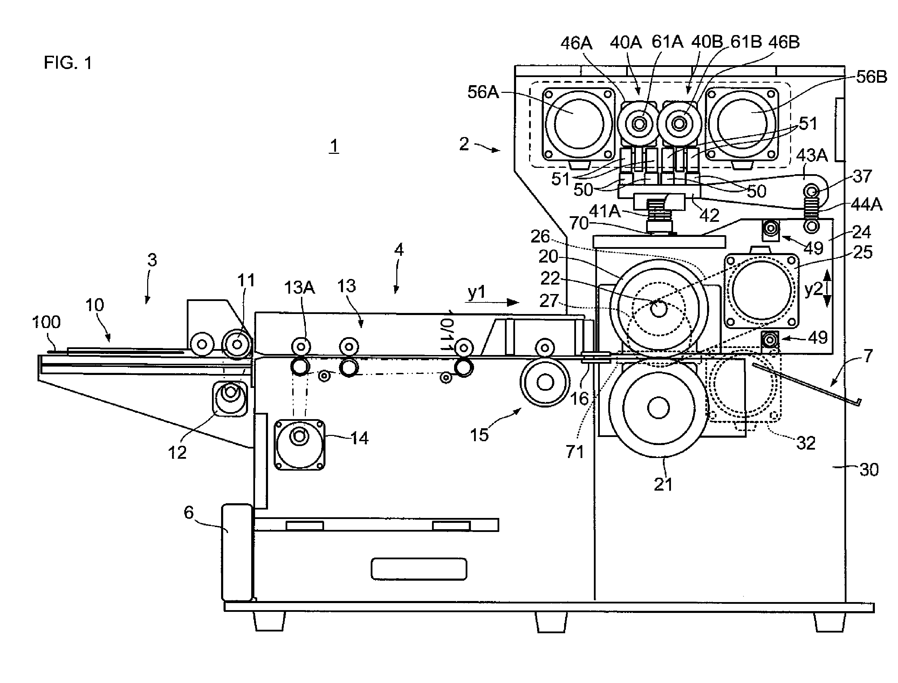

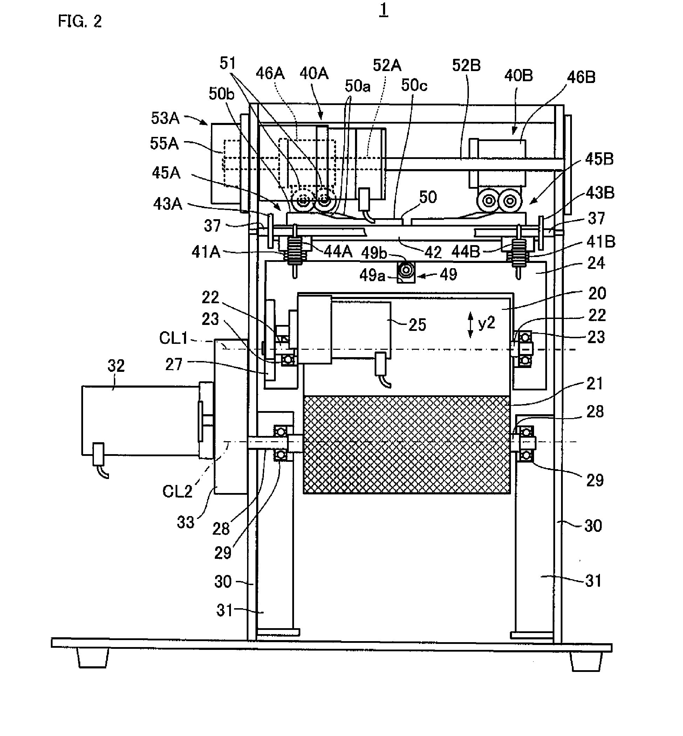

Figs 1 and 2 illustrate an emboss device according to an embodiment of the present invention. Fig. 1 shows a side view and Fig. 2 shows a front view from the right side of Fig. 1. The emboss device 1 is a device applying pressure on the surface of a print object 100, which is a sheet-like object, so as to impart the surface with protrusions and recesses. The print object 100 is a photograph including an image receiving sheet having a paper as a base material. Image is thermally transferred to the image receiving sheet, which is then covered with a protective layer. The emboss device 1 imparts protrusions and recesses to the surface (an image forming surface) of the print object 100 in the protective layer side. Thus, the print object 100 is processed into a matte-like condition with suppressed glossiness of the surface.

The emboss device 1 has a process part 2 located in the right half of Fig. 1 and imparting protrusions and recesses to a print object 100; a hold part 3 located in the left half of Fig. 1 and holding unprocessed print objects 100; a feeder 4 feeding the print object 100 fed from the hold part 3 to the process part 2 in a feeding direction y1; and a control part 6 located beneath the hold part 3 and controlling the parts. The hold part 3 is able to hold print objects 100 on a tray 10 in a stack of multiple sheets and feed the print objects 100 one by one from the tray 10 toward the feeder 4 when a drive roller 11 is driven by a motor 12. The feeder 4 has multi pairs (three pairs in the figure) of drive rollers 13 driven by the motor 14. Among these drive rollers 13, the roller 13A located just above the motor 14 acts as a cleaning roller which removes stain such as dust from the surface of the print object 100. Furthermore, the feeder 4 has a preheating roller 15 for preheating the print object 100 fed by the drive roller 13. The preheating roller 15 incorporates a heating device such as a heater and is able to control the heat amount of the heating device so as to keep the temperature of the print object 100 constant. Thus, even in a case that environmental conditions such as a room temperature of the installation place of the emboss device 1 is varied, the variation in the condition of the surface due to the variation of the temperature of the print object 100 can be suppressed. Accordingly, the variation in the condition of processing the print object 100 due to the variation in the environmental conditions for the emboss device 1 can be prevented. A feeder guide 16 for precisely guiding the print object 100 is provided at the boundary region between the feeder 4 and the process part 2. According to the above structure, the feeder 4 can clean up the print object 100 fed from the hold part 3 with the roller 13A, regulate the temperature of the print object 100 with the preheating roller 15, and feed out the print object 100 smoothly toward the process part 2 . The print object 100 is processed in a prescribed manner in the process part 2 and then stored temporarily in a delivery part 7.

As also described in Fig. 2, the process part 2 includes a press roller 20 applying pressure on a print object 100; and an emboss roller 21 arranged oppositely to the press roller 20, respectively. Protrusions and recesses in a prescribed shape are formed on the surface of the emboss roller 21. When the print object 100 is held and conveyed between the emboss roller 21 and the press roller 20, pressure is applied on the print object 100 so that the image forming surface (the surface facing the emboss roller 21) of the print object 100 is imparted with protrusions and recesses. In this embodiment, the direction feeding the print object 100 in the process part 2 is identical to the feeding direction y1 in the feeder 4. The press roller 20 and the emboss roller 21 have sufficiently greater width than the print object 100 so as to impart protrusions and recesses to the whole surface of the print object 100. The emboss roller 21 is constructed from hollow aluminum material, for example. The press roller 20 is supported by a roller support member 24 in a rotatable manner around an axis CL1 via ball bearings 23, 23 provided at both ends of a rotation shaft 22. A motor 25 is attached to the roller support member 24. The rotation of the motor 25 is transmitted to a pulley 27 via a belt 26, and thus the rotation of the pulley 27 is transmitted to one end of the rotation shaft 22 of the press roller 20 so that the press roller 20 is driven rotary.

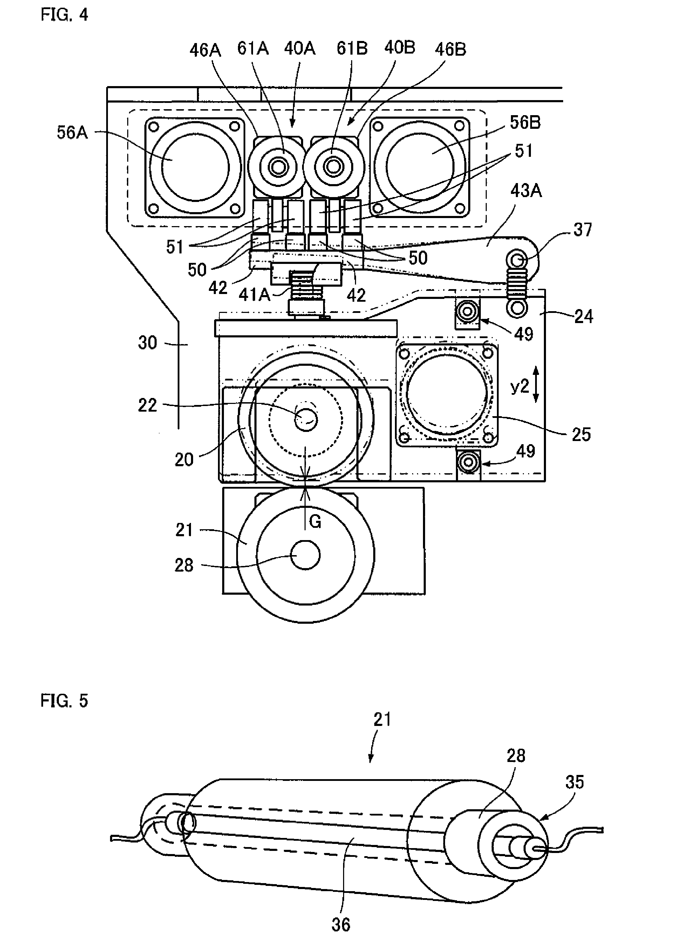

Ball bearings 29, 29 are arranged at both ends of the emboss roller 21. These ball bearings 29, 29 support a rotation shaft 28 such that the emboss roller 21 is attached to the bracket 31 fixed to the frame 30 in a rotatable manner around an axis CL2. The axis CL2 of the emboss roller 21 is parallel to the axis CL1 of the press roller 20. In other words, the press roller 20 and the emboss roller 21 are arranged such that their axes CL1, CL2 align in the same direction. The left end of the rotation shaft 28 of the emboss roller 21 in Fig. 2 extends outward from the frame 30. The rotation of a motor 32 provided outside the frame 30 is transmitted to the end via a reduction mechanism 33. Thus, the emboss roller 21 is driven rotary. As shown in Fig. 5, the emboss roller 21 includes a temperature control mechanism 35 capable of setting the temperature of the surface the emboss roller 21 within a prescribed range of temperature. The temperature control mechanism 35 includes a heating body such as a heater 36 provided inside the rotation shaft 28 of the emboss roller 21. The temperature of the surface of the emboss roller 21 is set by regulating the heat amount of the heater 36 appropriately. The preset temperature can be regulated up to 90 degree Celsius at the interval of 5 degree, for example. Preferably, the temperature of the surface of the emboss roller 21 may be set in a range of 70 to 90 degree Celsius, for example.

As shown in Figs. 1 and 2, the emboss device 1 includes a pair of press mechanisms 40A, 40B for regulating pressure (pressing force) applied by the press roller 20 on the print object 100. The press mechanisms 40A, 40B have a similar structure to each other. Thus, the press mechanism 40A is able to regulate the pressing force in one direction (to the left in Fig. 2) along the axis CL1 of the press roller 20, whereas the press mechanism 40B is able to regulate the pressing force in the other direction (the right one in Fig. 2). By regulating the balance of their pressing forces of the press mechanisms 40A, 40B, respectively, the pressing forces in the axis CL1 of the press roller 20 can be homogenized. The press mechanism 40A has a connecting member 42 connected to the roller support member 24 via a press spring 41A located just above the press roller 20. Similarly, the press mechanism 40B has a connecting member 42 connected to the roller support member 24 via a press spring 41B. Although the connecting member 42 is shared between two press mechanisms 40A, 40B of the emboss device 1, the connecting member 42 may be divided into two parts so that the press mechanisms 40A, 40B are provided with their dedicated connecting member, respectively.

The connecting member 42 has a pair of arms 43A, 43B each extending in one direction (to the right in Fig. 1) from the position where the press spring 41A, 41B is arranged. One end of these arms is rotatably connected to a mount shaft 37, which extends in parallel to the axis CL1 of the press roller 20 and fixed to the frame 30. The mount shaft 37 and the roller support member 24 are connected to each other via a pair of return springs 44A, 44B. The return springs 44A, 44B are provided in a rear of the press roller 20 (in the right side of Fig. 1) and at the positions corresponding to the respective press springs 41A, 41B.

According to the above structure, the emboss device 1 can move the roller support member 24 and the press roller 20 as a unit toward the frame 30 in the thickness direction of the print object 100, in other words, in a direction y2 crossing the feeding direction y1 of the feeder 4, while holding the pair of press springs 41A, 41B and the pair of return springs 44A, 44B therebetween. In this embodiment, the direction y2 is set to a direction perpendicular to the feeding direction y1 and further is set to the vertical direction. Furthermore, two guide devices 49 for guiding their move are provided on each of the both sides of the roller support member 24 (only a pair of them are shown in Fig. 1), one on the front side of the roller support member 24 and the other on the rear side of them (only one is shown in Fig. 2) . The guide device 49 includes a guide groove 49a formed to the roller support member 24; and a guide piece 49b attached to the frame 30 in a movable manner along the guide groove 49a. A prescribed amount of play is provided between the guide groove 49a and the guide piece 49b. By appropriately adjusting the amount of the play at each guide device 49, the roller support member 24 is prevented from moving beyond its allowable range, thereby to provide enough margin on mechanical errors of the emboss roller 21 or the like. Accordingly, the roller support member 24 can keep its sure and stable operation.

The return springs 44A, 44B act as urging the connecting member 42 together with the roller support member 24 in a direction separating them from the emboss roller 21 (the upward direction in the figure). The state shown in Figs. 1 and 2 shows pressing positions of the press mechanisms 40A, 10B, at which the press mechanisms 40A, 10B move the connecting member 42 downward, and the press springs 41A, 41B are compressed by a prescribed amount due to the move. At the pressing positions, the return springs 44A, 44B are elongated by a prescribed amount, and the press springs 41A, 41B are compressed by a prescribed amount. Thus, when the pressing by the press mechanisms 40A, 40B against the connecting member 42 is released as shown in Fig. 4, the compressions of the press springs 41A, 41B are released, and the connecting member 42 returns from the pressing position indicated with solid line in Fig. 4 to a waiting position indicated with imaginary line. At the waiting position, a prescribed gap G is formed between the press roller 20 and the emboss roller 21. The gap G is set wider than the thickness of the print object 100.

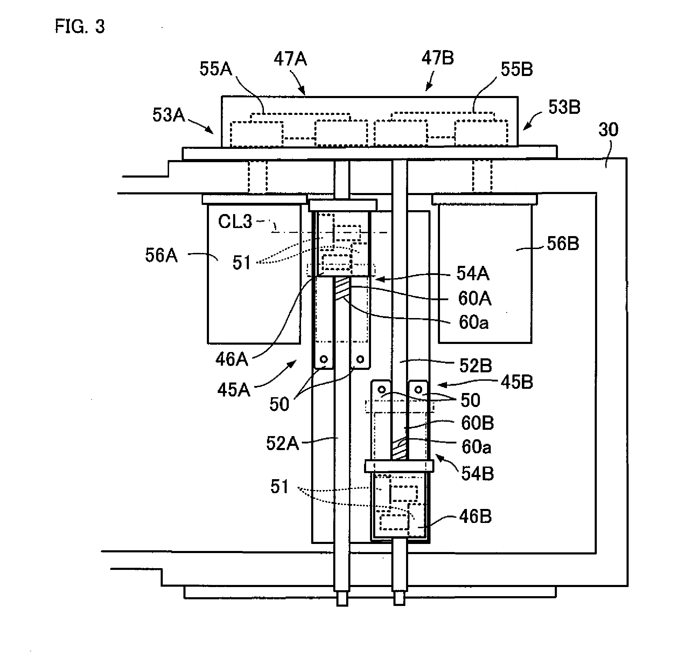

Fig. 3 is an enlarged top view of Figs. 1 and 2, and shows the press mechanisms 40A, 40B in a magnified manner. In the following, the press mechanism 40A will be described, and symbols of the components relating to the press mechanism 40A are suffixed with A. The press mechanism 40B is similarly constructed to the press mechanism 40A, and symbols of the components relating to the press mechanism B are suffixed with B in the drawings. Accordingly, the duplicated description will be omitted. As shown in Figs. 1 to 3, the press mechanism 40A is attached on the upper surface of the connecting member 42, and includes an inclined member 45A extending in the direction of the axis CL1 of the press roller 20; a moving member 46A located above the inclined member 45A and movable in the direction of the axis CL1 of the press roller 20 (the lateral direction in Fig. 2) so as to be kept at a same height; and a drive mechanism 47A driving the moving member 46A to move in the same direction.

The inclined member 45A is composed of two inclined plates 50, 50 formed with inclined surfaces 50a. The inclined surfaces 50a have a difference in height in the thickness direction of the print object 100, namely, in the direction y2 shown in Fig. 1. Each inclined plate 50 is formed such that both ends of the inclined surface 50a are connected to an upper surface 50b and a lower surface 50c which are parallel to each other and have a difference in height in the direction y2. The moving member 46A is provided with a pair of contact rollers 51, 51 rotatable around an axis CL3 perpendicular to the moving direction of the moving member 46A such that the contact rollers 51 are able to run on the inclined plates 50 corresponding to the respective contact rollers 51. The inclined plate 50 is constantly pressed against the pair of contact rollers 51, 51 by a return force of the return spring 41A (41B). Furthermore, the pair of contact rollers 51, 51 is provided to the moving member 46A, such that they are displaced in a rear-and-front direction in the moving direction of the moving member 46A. The positions of the inclined surfaces 50a formed on the respective inclined plates 50 are displaced corresponding to the amount of the displacement of the pair of contact rollers 51, 51. Thus, the contact between the pair of contact rollers 51, 51 and the inclined plates 50 are constantly kept in the moving range of the moving member 46A. Accordingly, it is prevented that one contact roller 51 separates from the inclined plate 50 and load applies only on the other contact roller 51 as the moving member 46A moves.

The drive mechanism 47A includes a rotating shaft 52A extending in a direction parallel to the axis CL1 of the press roller 20; a drive device 53A rotary-driving the rotating shaft 52A; and a ball screw mechanism 54A converting the rotational motion of the rotating shaft 52A into a linear motion along the axial direction and transmitting it to the moving member 46A. The rotating shaft 52A is rotatably attached to the frame 30, and one end of the shaft (the left one in Fig. 2) is connected to the drive device 53A. The drive device 53A includes a motor 56A; and a rotation transmitting mechanism 55A which reduces the speed of the rotation of the motor 56A and transmits the rotation to the rotating shaft 52A. When the motor 56A operates, the rotating shaft 52A is driven rotary. Like a well known mechanism, the ball screw mechanism 54A includes an external thread 60A having a helical ball-transfer groove 60a formed on the outer peripheral surface of the rotating shaft 52A; multiple balls (not shown) rolling along the ball-transfer groove 60a; and a nut 61A (Fig. 1) provided to the moving member 46A and interlaced with the external thread 60A while holding the multiple balls therebetween. Thus, by controlling the operation of the motor 56A, the move amount and the position of the moving member 46A can be controlled respectively. Furthermore, by appropriately setting the inclination angle of the inclined surface 50a with respect to the lower surface 50c of the respective inclined plate 50, the initial application of pressing force can be regulated. Namely, the smaller is set the inclination angle, the more smoothly applied the pressing force on the print object 100.

According to the above structure, the move amount by which the press mechanism 40A pushes down the connecting member 42 can be regulated. Thus, the pressing force of one of the press rollers 20 (the left one in Fig. 2) can be regulated. The press mechanism 40B has a similar structure to the press mechanism 40A. Thus, the pressing force of the other press roller 20 (the right one in Fig. 2) can be regulated. Thus, the balance of the pressing forces in the axis CL1 of the press roller 20 can be regulated, so that the pressing force in the width direction of the print object 100 can be regulated.

The control part 6 shown in Fig. 1 has a CPU including a microprocessor; and peripheral devices including storage devices such as a ROM and a RAM necessary for the operation of the CPU. The ROM of the control part 6 stores various programs describing the control procedures for controlling various parts of the device. The CPU appropriately reads and executes necessary programs from the ROM. The control part 6 is connected to a prescribed power unit, and is further connected electrically to the motors 12, 14, 25, 32, 56A, and 56B, which are provided to the above drive roller 11 in the hold part 3, the drive rollers 13 and the preheating roller 15 in the feeder 4, the press roller 20 in the process part 2, the emboss roller 21 and the moving members 46A, 46B in the press mechanism 40 as their respective driving sources. Furthermore, the control part 6 is connected electrically to the temperature control mechanism 35 provided to the emboss roller 21, and controls the heat amount of the heater 36.

As shown in Fig. 1, two load cells 70 are provided in total and are electrically connected to the control part 6, one between the roller support member 24 and the press spring 41A and the other between the roller support member 24 and the press spring 41B. The load cell 70 outputs, as well known, an electric signal according to applied load. Thus, the pressing forces by the press mechanisms 40A, 40B can be detected, respectively. Furthermore, presence sensors 71 are provided between the press roller 20 and the emboss roller 21. The presence sensors 71 can detect the presence of the print object 100 to be processed, as well as the front and rear ends of the print object 100 in the feeding direction, respectively. The presence sensor 71 may be either a contact sensor or a noncontact sensor.

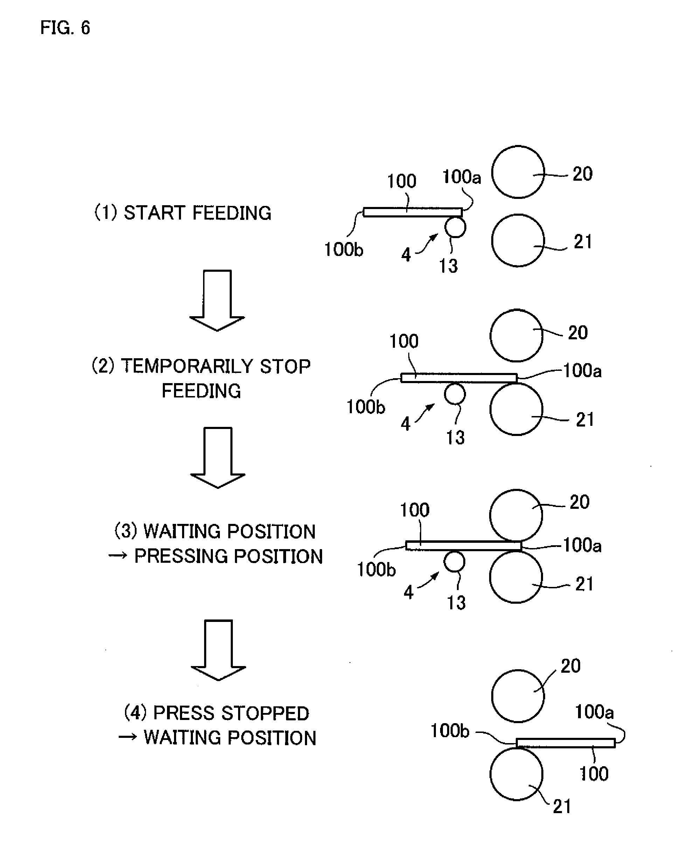

Next, the main control performed by the control part 6 will be described. Fig. 6 is a view schematically illustrating a control procedure performed by the control part 6. As shown in the figure, at first, (1) when a prescribed start condition is established, the control part 6 starts feeding the print object 100 while keeping the roller support member 24 in a waiting position (the position indicated with imaginary line in Fig. 4) . Next, (2) the control part 6 temporarily stops feeding the print object 100 when the presence sensor 71 detects that the forward end 100a of the print object 100 in the feeding direction positions between the press roller 20 and the emboss roller 21. The position at which the feeding is to be stopped is set in a prescribed range including a contact point where the press roller 20 and the emboss roller 21 contact with each other. Then, (3) the control part 6 moves the roller support member 24 from the waiting position to a pressing position (the position indicated with solid line in Fig. 4), resumes feeding the print object 100 as well as driving the press roller 20 and the emboss roller 21, thereby to process the print object 100. Then, (4) when the presence sensor 71 detects that the rear end 100b of the print object 100 in the feeding direction y1 positions between the press roller 20 and the emboss roller 21, the control part 6 stops driving the press roller 20 and the emboss roller 21, and moves the roller support member 24 from the pressing position to the waiting position, thereby to end the processing. Thus, the control part 6 stops temporarily the feeding, when the forward end 100a in the feeding direction y1 is detected. Then, the roller support member 24 moves from the waiting position to the pressing position, and the print object is processed. Accordingly, a prescribed protrusions and recesses can be imparted to all over the print object 100 from one end to the other. Furthermore, when no print object 100 is present between the press roller 20 and the emboss roller 21, the roller support member 24 is kept in the waiting position. Thus, the adverse direct contact of the press roller 20 and the emboss roller 21 can be avoided.

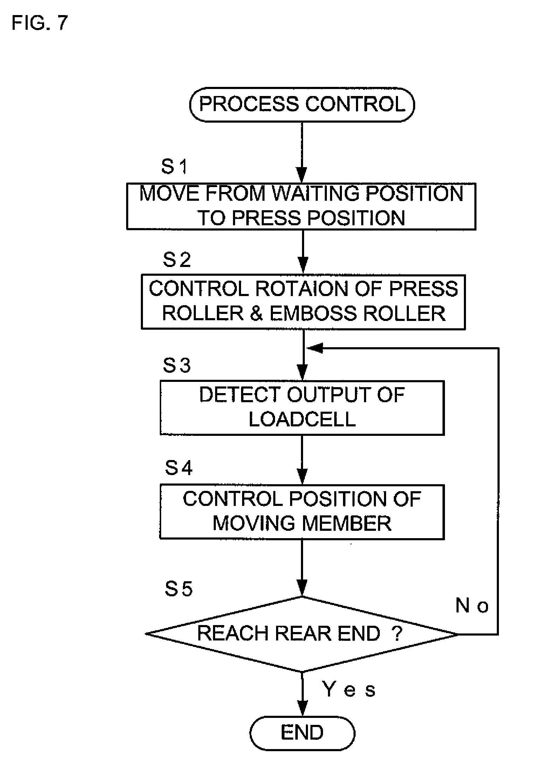

Next, details of the control (process control) performed by the control part 6 in the above step (3) will be described. Fig. 7 is a flowchart showing an example of a control procedure of the process control. First, the control part 6 moves the moving member 46A of the press mechanism 40A and the moving member 46B of the press mechanism 40B from their waiting positions to the pressing positions, in step S1 . Specifically, the control part 6 controls the operations of the motors 56A, 56B, respectively, such that the moving members 46A, 46B move from the positions of the moving members 46A, 46B indicated with imaginary line in Fig. 3 up to the positions where the contact rollers 51 ride over on a part of the inclined surfaces 50a of the respective inclined plates 50. In this case, the positions of the moving members 46A, 46B are set to prescribed positions corresponding to a target value of the pressing force. The prescribed positions may be varied according to a type of the print object 100 to be processed. For example, the prescribed position may be set such that the total load applied on the print object 100 is in a range of 500 to 700 kgf. Next, the control part 6 controls the operations of the motors 56A, 56B, respectively such that the press roller 20 and the emboss roller 21 are respectively driven rotary (step S2). The speed of feeding the print object 100 in processing may be set appropriately and is set to 2 to 20 mm/s, for example. It is noted that the rotation speeds of the motor 25 of the press roller 20 and the motor 32 of the emboss roller 21 are regulated respectively, so as not to generate a difference in a feeding speed (the speed in a tangential direction) between the press roller 20 and the emboss roller 21 beyond an allowable limit.

Next, the control part 6 detects the output of the respective load cell 70 (step S3), and controls the positions of the moving members 46A, 46B respectively so as to reduce the deviation between the detected result and the target value of the pressing force (step S4). The processes in steps S3 and S4 are repeated until the rear end 100b of the print object 100 in the feeding direction y1 is detected (step S5). Thus, the pressing force against the print object 100 is regulated, and the print object 100 can be processed with a nearly constant pressing force. Accordingly, the print object 100 can be processed accurately corresponding to an individual difference of the print object 100.

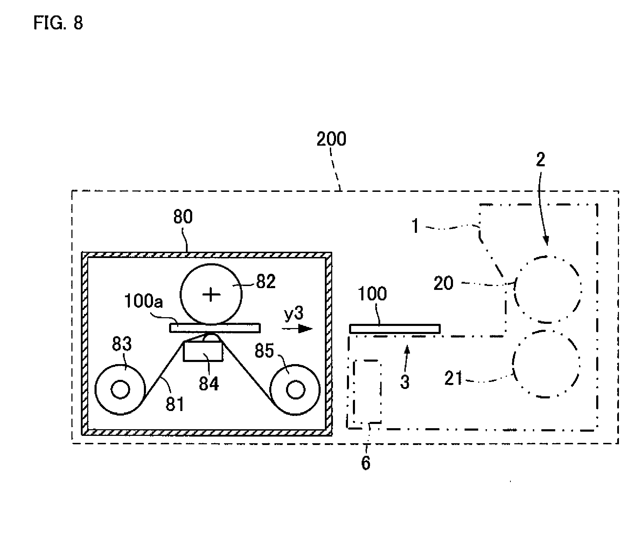

The above mentioned emboss device 1 may be embodied in a separate unit, or may be embodied as a printing system 200 by combining the emboss device 1 and a printer 80 as shown in Fig. 8, for example. The printer 80 shown in Fig. 8 is constructed as a sublimation thermal transfer printer, which forms image by thermally transferring ink on a transfer sheet to an image receiving paper. The printer 80 includes a platen roller 82 which supports and feeds the image receiving paper 100a; a feed roll 83 on which an unused thermal transfer sheet 81 is wound; a thermal head 84 for heating the thermal transfer sheet 81 fed from the feed roll 83; and a winding roll 85 winding up the transfer sheet 81 heated by the thermal head 84. The platen roller 82, the feed roll 83, the thermal head 84, and the winding roll 85 are arranged in a manner perpendicularly crossing the feeding direction y3 of the image receiving paper 100a, and extending over the full width of the image receiving paper 100a. The platen roller 82 and the thermal head 84 are arranged so as to held and able to press the image receiving paper 100a therebetween at a prescribed pressure. According to the printing system 200 of Fig. 8, image is thermally transferred on the image receiving paper 100a by the printer 80, and thus the print object 100 is formed. The print object 100 on which the image is formed is fed to the hold part 3 of the emboss device 1, and then protrusions and recesses are imparted in the process part 2. It is noted that the printing system 200 may be constructed such that the control part 6 can selectively impart protrusions and recesses to the print object 100 corresponding to the necessity of processing the print object 100 formed in the printer 80. In this case, both the print object 100 imparted with protrusions and recesses and the print object 100 without them can be obtained according to a preference of a use.

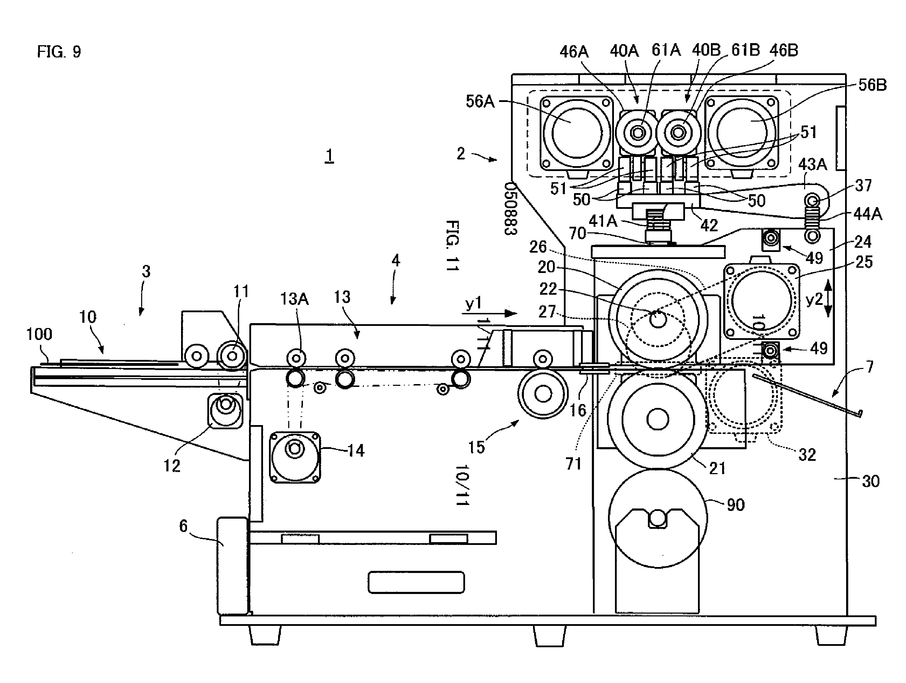

As shown in Fig. 9, a backup roller 90 may be rotatably attached to the frame 30 in the emboss device 1, such that the backup roller 90 contacts with the emboss roller 21. The backup roller 90 is driven by the emboss roller 21. The backup roller 90 is formed with a substantially same width in the axis CL2 direction to the width of the emboss roller 21. According to the embodiment in Fig. 9, deformation such as deflection of the emboss roller 21 is suppressed, therefore accuracy in the processing can be improved.

### Working Example

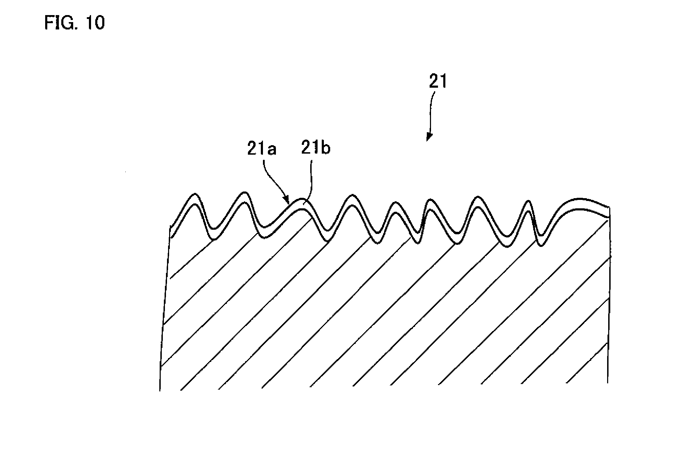

Next, examples of the print object processed by using the emboss device 1 will be described with reference to Figs. 10 to 13. In these examples, a print object 100 is embossed according to the above procedure using the emboss device 1, for which multiple emboss rollers 21A to 21N having different conditions from each other are prepared for and to which one of them is assembled. It is noted that, when it is not necessary to distinguish the emboss rollers 21A to 21N from each other, the symbols 'A to N' will be omitted and they will be represented with the symbol "21" in the following description.

Fig. 10 is a drawing illustrating an enlarged view of a part of a structure common to the emboss rollers 21A to 21N. The emboss roller 21 is constructed from aluminum with a diameter of 80 mm. As shown in Fig. 10, the surface 21a is covered with a plating layer 21b. Material constituting the plating layer 21b may be chromium, Kanigen ally or the like. It is noted that the emboss roller 21H and the emboss roller 21I have no plating layer 21b and expose their base surface. Although protrusions and recesses are formed on the surfaces 21a of the emboss rollers 21, the conditions of the surfaces of the emboss rollers 21A to 21N differ from each other.

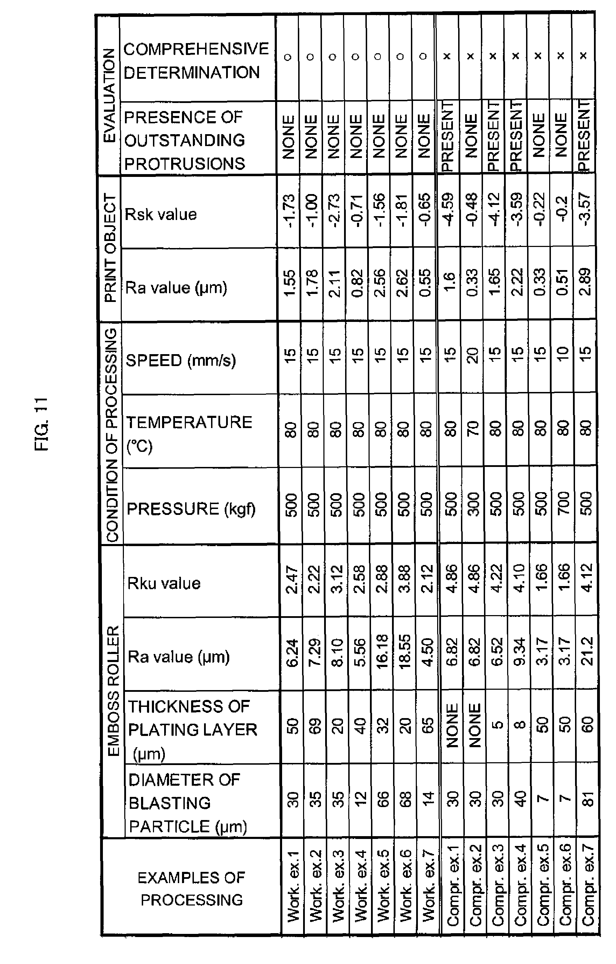

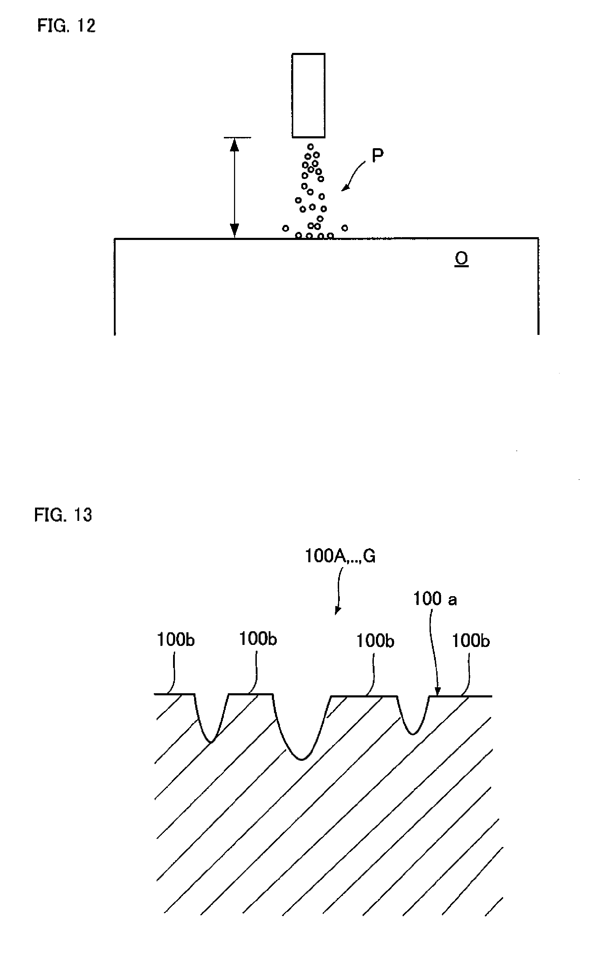

Fig. 11 shows various properties and results of evaluation of the examples to be processed. The emboss rollers 21A to 21G are used in the working examples 1 to 7, whereas the emboss rollers 21H to 21N are used in the comparative example 1 to 7, respectively. Protrusions and recesses are formed on the emboss rollers 21 by a so-called "sand-blasting method". As shown in Fig. 12, a sand-blasting method is a well known processing method, in which many particles P are jetted out at a prescribed condition with a compressive fluid such as high-pressure water and compressed air, so that the object O is bombarded with the particles P and thus imparted with protrusions and recesses. Various conditions are set as conditions of the processing, such as a time during which the particles P are bombarding (time of processing), the distance between the emboss roller 21 and the position from which the particles are jetted out (bombarding distance of particle), and the diameter of the particle P. Furthermore, the material of the particle P is not limited to silica sand (glass beads). Particle-like blaster material such as glass, aluminum oxide, steal, or magnetite can be used. In the present examples, the time of process is set to 10 min., the bombarding distance of particle is set to 300 mm, respectively. The diameter of the particle P bombarding the emboss rollers 21A to 21N is varied as shown in Fig. 11 corresponding to the respective emboss rollers 21A to 21N to be prepared (however; particles having a same diameter are used in certain examples). It is noted that the diameter of the particle P is regulated by using a sorting device such as a sieve. Furthermore, the thickness of the plating layer 21b shown in Fig. 10 is varied corresponding to the respective emboss rollers 21A to N (however; plating layer having a same thick are used in certain examples) . It is noted that, in manufacturing the emboss roller 21, the plating layer 21b is formed so as to harden the surface 21a, and then protrusions and recesses are formed by sand-blasting method.

The emboss rollers 21A to 21N having different conditions of the surfaces 21a are obtained by preparing the emboss roller 21 in the above manner. Arithmetic mean roughness Ra defined in JIS B0601:2001 standard and kurtosis Rku defined in the same standard are measured respectively as the conditions of the surface 21a. In order to measure Ra and Rku, a surface roughness measuring device compliant with JIS B0651:2001 standard is used. The SURFCOM 1800D-3DF (TOKYO SEIMITSU CO., LTD.) may be used as the measuring device, for example. The conditions and method of the measurement will be listed below:

Method of measuring: Two dimensional;
Range of measuring: 4 mm;
Pitch of measuring: 20 µm;
Magnification of measuring: 20K;
λs filter: none;
Type of cutoff: Gaussian
Cutoff wave length: 0.8 mm
Inclination correction: least square line;
Speed of measuring: 0.6 mm/s; and
Type of pickup: standard pickup.

The conditions of emboss processing in the working examples will be tabulated in Fig. 11. The temperature and pressure of processing the print object 100 are set as the conditions of the processing. The temperature of processing the print object 100 means the temperature of the surface of the emboss roller 21 set by the temperature control mechanism 35. The temperature of the surface is measured with a temperature sensor provided at an appropriate position on the emboss roller 21. The pressure of the processing has a same meaning as the above pressing force. However, numerals of the pressure of the processing are indicated as loads (kgf) applied on the print object 100 over the width 210 mm thereof. The pressure of processing is measured by using the above load cell 70. The load cell LMR-S-5KNSA2 (KYOWA ELECTRONIC INSTRUMENTS CO., LTD.) is used as the load cell 70.

An arithmetic mean roughness Ra defined in JIS B0601:2001 standard and skewness Rsk defined in the same standard are measured respectively as the conditions of the uneven surface of the print object, which is a result of the processing in each example. The measurements of Ra and Rsk are performed with the same surface roughness measuring device used in the measurements of the conditions of the surface of the emboss roller 21. The same measuring conditions are used as above.

The respective example of processing is evaluated as follows: The uneven surface of the print object, which is a result in the example, is observed visibly. Presence of apparently greater protrusions and recesses than the majority of the protrusions and recesses is evaluated. Such protrusions and recesses will be referred as outstanding protrusions. If outstanding protrusions are present, the observer feels unevenness of the protrusions and recesses. Then, the observer determines the uneven surface in such a comprehensive manner that they mark "o" if the print object has a preferable tone like a silky tone of silver salt photography, whereas they mark "×" if s/he does not feel such a preferable tone or finds other problems.

Thus, preferable results are obtained for the working examples 1 to 7 in which the surface 21a of the emboss roller 21 has Ra-value of 4.50 to 18.55 µm and Rku-value of 2.12 to 3.88. Namely, a print object having a preferable tone can be obtained in which the conditions of the uneven surface includes Ra-value of 0.55 µm or more and Rsk-value of -2.73 to -0.65.
Fig. 13 is a section view schematically illustrating the characteristic appearance of the print object 100A to 100G, which is obtained as a result of the respective working example. As shown in the figure, flat areas 100b are present on the print objects 100A to 100G, since Rsk-value as a condition of the uneven surface 100a is negative. It is considered that the protrusions formed on the surface 21a of the emboss roller 21 have not been completely pushed down against the print object until they reach the bottom of the recesses is the reason why these flat areas 100b remain thereon.

On the contrary, presence of the outstanding protrusions is ascertained on the uneven surface in the comparative examples 1, 3, 4, and 7, respectively, in which Rku-value is greater than the upper limit of the Rku-value for the emboss roller 21. Furthermore, although Rku-value is greater than the upper limit of the Rku-value for the emboss roller 21 in the comparative example 2, presence of the outstanding protrusions is not ascertained. However, an adverse effect is developed in which setting the conditions becomes more difficult, since the conditions of emboss processing must be set milder than that of the working examples 1 to 7 so as to intentionally make it more difficult to impart a print object with protrusions and recesses.

On the contrary, in the comparative examples 5 and 6 in which Rku-value is less than the lower limit of the Rku-value for the emboss roller 21, preferable results cannot be obtained although no outstanding protrusion are ascertained. Namely, it is mandatory in the comparative example 5 to regulate the diameter of the particle P used in the blast processing less than the lower limit of the range of the diameter of 30 to 68 µm in the working examples 1 to 7. An adverse effect is developed in which easy-setting of the blast processing is inhibited. On the other hand, the conditions of the emboss processing has to be enhanced in the comparative example 6 than those of the working examples 1 to 7 so that the print object is more easily imparted with protrusions and recesses. Thus, an adverse effect is developed in which setting the conditions becomes more difficult.

As described above, in order to obtain preferable results, the conditions of the surface of the emboss roller includes preferably an arithmetic mean roughness Ra of 4.50 to 18.55 µm and kurtosis Rku of 2.12 to 3.88. Furthermore, it becomes apparent that the conditions of the uneven surface of the print object includes an arithmetic mean roughness Ra of 0.55 µm or greater and skewness Rsk of -2.73 to -0.65 in a preferable embodiment.

The present invention is not limited to the above embodiment and can be embodied in various forms. There are no special restrictions on the material of the emboss roller 21, the material of the particle P, and the method of bombarding for forming protrusions and recesses on the surface 21a of the emboss roller 21. They may be selected appropriately. Furthermore, the method of forming protrusions and recesses on the surface 21a of the emboss roller 21 is not limited to a sand-blasting method, and protrusions and recesses may be formed with a known method of processing such as an electrical discharge machining. Furthermore, it is not mandatory to cover the surface 21a of the emboss roller 21 with the plating layer 21b, and the plating layer 21b may be omitted. Furthermore, the surface may be coated by using other methods than plating.

Furthermore, the above press roller 20 and emboss roller 21 may be exchanged with each other. Namely, the emboss roller 21 may be supported by the roller support member 24. It is noted that when the press roller 20 is in an upper side and the emboss roller 21 is in a lower side in the vertical direction as shown in Figs 1 and 2, foreign matter such as dust is difficult to pile up on the emboss roller 21. Furthermore, the surface of the print object 100 on which protrusions and recesses are imparted faces down in the vertical direction. Thus, it is advantageous in that foreign matters become difficult to be adhered to the surface.

## Claims

1. An emboss device, comprising:
an emboss roller having a surface on which protrusions and recesses are formed; and
a press roller arranged oppositely to the emboss roller, wherein a sheet-like print object is held between the emboss roller and the press roller and is imparted with protrusions and recesses, and
the surface of the emboss roller has an arithmetic mean roughness Ra defined in JIS B0601:2001 standard of 4.50 to 18.55 µm and kurtosis Rku defined in the same standard of 2.12 to 3.88.

2. The emboss device according to claim 1, wherein
the surface of the emboss roller is covered with a plating layer of 20 µm or greater thick, and
the protrusions and recesses are formed by bombarding the surface with particles of 12 to 68 µm diameter.

3. A print object having an uneven surface imparted with protrusions and recesses on a side of the print object on which image has been thermally transferred, wherein
the uneven surface of the print object has an arithmetic mean roughness Ra defined in JIS B0601:2001 standard of 0.55 µm or greater and skewness Rsk defined in the same standard of -2.73 to -0.65.

4. The print object according to claim 3, wherein
the uneven surface is imparted with protrusions and recesses such that the print object is held between an emboss roller having a surface on which protrusions and recesses are formed and a press roller arranged oppositely to the emboss roller.

5. The print object according to claim 4, wherein the surface of the emboss roller has an arithmetic mean roughness Ra defined in JIS B0601:2001 standard of 4.50 to 18.55 µm and kurtosis Rku defined in the same standard of 2.12 to 3.88.
